# EUROPÄISCHE PATENTSCHRIFT

(11) **EP 2 224 309 B1**
(45) Veröffentlichungstag und Bekanntmachung des Hinweises auf die Patenterteilung: **04.03.2015**
(21) Anmeldenummer: 09170319.9
(22) Anmeldetag: 15.09.2009
(51) Int. Cl.: G06F 1/16, G06F 1/18

(54) **Batterie betriebenes Computersystem**
Battery-operated computer system
Système informatique fonctionnant sur batterie

(30) Priorität: 26.02.2009 DE 102009010470
(43) Veröffentlichungstag der Anmeldung: 01.09.2010
(73) Patentinhaber: Fujitsu Technology Solutions Intellectual Property GmbH, 80807 München (DE)
(72) Erfinder: Woerrlein, Hartmut, 83052 Bruckmühl (DE)
(74) Vertreter: Epping - Hermann - Fischer

(56) Entgegenhaltungen:
- EP-A1- 1 162 532
- US-A1- 2004 233 630
- US-A1- 2005 189 922
- Samsung: "GSM Telephone SGH-E700", Samsung , 30. Juni 2003 (2003-06-30), XP002621586, Korea Gefunden im Internet: URL:http://www.faq4mobiles.de/flashes/dodo tech/Samsung_SM/Samsung%20SGH-E700%20servi ce%20manual.pdf [gefunden am 2011-02-08]

## Beschreibung

Die Erfindung betrifft ein Batterie betriebenes Computersystem umfassend wenigstens eine Systemkomponente zur Datenverarbeitung, wenigstens ein Gehäuse zur Aufnahme der Systemkomponente und wenigstens ein in das Gehäuse integriertes, austauschbares Batteriemodul zur Energieversorgung der Systemkomponente.

Derartige Computersysteme sind vielfach bekannt. Insbesondere bei so genannten Notebook- oder Netbook-Computern ist es üblich, austauschbare Batteriemodule zur Stromversorgung von Systemkomponenten vorzusehen. Dabei handelt es sich in der Regel um Batteriemodule mit einer oder einer Vielzahl von zylinderförmigen, wiederaufladbaren Batteriezellen.

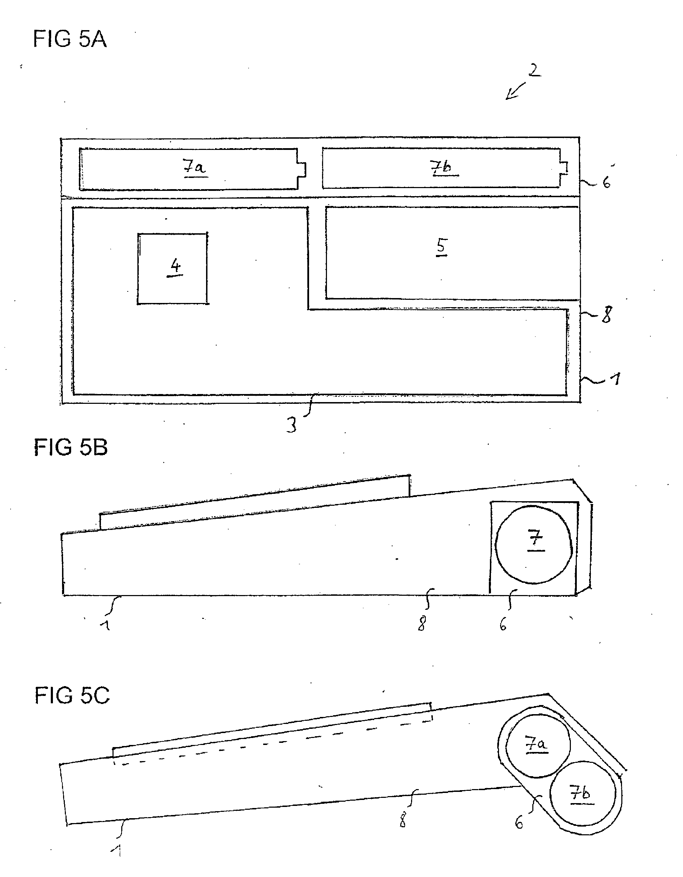

Figur 5A zeigt eine beispielhafte Anordnung eines konventionellen Notebooks. In einem Gehäuse 1 eines Computersystems 2 ist eine Hauptplatine 3 mit einem Prozessor 4 angeordnet. Zusätzlich ist in dem Computersystem 2 ein Erweiterungsmodul 5 angeordnet, beispielsweise ein Laufwerksmodul. Im rückwärtigen Bereich des Gehäuses 1 ist des Weiteren ein Batteriemodul 6 umfassend zwei Batteriezellen 7a und 7b angeordnet. Bei den Batteriezellen 7a und 7b handelt es sich um zylinderförmige, wiederaufladbare Lithium-Ionen-Zellen. Das Batteriemodul 6 wird in eine entsprechende Aussparung eines Grundkörpers 8 des Gehäuses 1 eingesetzt.

Ein Vorteil in der Verwendung von austauschbaren Batteriemodulen 6 liegt darin, dass im Falle von defekten oder leistungsschwachen Batteriezellen 7 das Batteriemodul 6 unabhängig vom Rest des Computersystems 2 ausgetauscht werden kann. Außerdem kann die Betriebsbereitschaft des Computersystems 2 durch Ersatz eines entladenen Batteriemoduls 6 mit einem geladenen Batteriemodul 6 schnell wieder hergestellt werden.

Um eine möglichst lange Laufzeit des Computersystems 2 zu erreichen, werden bevorzugt Batteriezellen 7 mit besonders hoher Ladekapazität gewählt. Dies hat zur Folge, dass der von dem Batteriemodul 6 eingenommene Raum in dem Gehäuse 1 verhältnismäßig groß ist.

Figur 5B zeigt eine Seitenansicht des Computersystems 2 mit dem Batteriemodul 6. Das Gehäuse 1 des Computersystems 2 verdickt sich nach hinten. Dadurch kann eine Batteriezelle 7 mit verhältnismäßig großem Durchmesser in dem Gehäuse 1 angeordnet werden.

Um die Betriebsdauer des Computersystems 2 noch weiter zu erhöhen, kann ein Batteriemodul 6 mit einer größeren Anzahl von Batteriezellen 7 verwendet werden, das gegenüber dem in der Figur 5B dargestellten Batteriemodul 6 eine vergrößerte Batteriekapazität aufweist.

Figur 5C zeigt ein Computersystem 2 umfassend ein solches Hochkapazitätsbatteriemodul 6. Wie aus der Figur 5C ersichtlich, steht das Hochkapazitätsbatteriemodul 6 in der Regel nach hinten oder nach unten über die Abmessungen des Gehäuses 1 des Computersystems 2 hinaus. Hervorstehende Teile sind insbesondere im mobilen Betrieb des Computersystems 2 unpraktisch. Darüber hinaus ändern sie möglicherweise den Anstellwinkel einer in das Gehäuse 1 integrierten Tastatur.

Aus der US 2004/0233630 A1 ist ein tragbares elektronisches Gerät in Form eines Notebooks mit abnehmbaren Komponenten bekannt. Dessen Gehäuse weist eine Aufnahmeöffnung auf, in die unter anderem ein Batteriepack aufgenommen werden kann.

Aus der US 2005/0189922 A1 ist ein tragbares elektronisches Gerät in Form eines Notebooks mit einem abnehmbaren System und Erweiterungsmodulen bekannt. Das Notebook umfasst insbesondere eine in einem Bodenteil angeordnete erste Batterie und eine in einem Deckelteil angeordnete zweite Batterie.

Aus dem Service-Handbuch zu dem GSM Telefon SGH-E700 der Firma Samsung ist ein Mobiltelefon mit einem klappbaren Gehäuse bekannt. Ein Gehäusebasisteil weist eine rückseitige Abdeckung mit einer Vertiefung zur Aufnahme einer Batterie auf.

Eine Aufgabe der vorliegenden Erfindung ist es, ein Batterie betriebenes Computersystem zu beschreiben, das eine Erhöhung der Laufzeit des Computersystems ohne oder mit nur geringen Auswirkungen auf dessen Bauform ermöglicht. Darüber hinaus soll ein Batterie betriebenes Computersystem beschrieben werden, das eine modulare Kapazitätserhöhung gestattet, ohne dass sich die Gehäuseproportionen oder die Neigung einer Gehäuseoberfläche ändern.

Die oben genannte Aufgabe wird durch ein Computersystem gemäß Patentanspruch 1 gelöst. Darin ist das Batteriemodul flach ausgestaltet, besitzt eine Ausdehnung, die im Wesentlichen einer Grundfläche des Gehäuses entspricht, und bildet einen Gehäusedeckel des Gehäuses bildet. Erfindungsgemäß ist das Batteriemodul als Bodenschale des Gehäuses ausgestaltet.

Durch die Ausgestaltung des Batteriemoduls als flacher Gehäusedeckel, dessen Ausdehnung im Wesentlichen einer Grundfläche des Gehäuses entspricht, können verhältnismäßig großvolumige Batteriemodule verwendet werden, die nicht zu einer wesentlichen Vergrößerung eines Gehäuses des Computersystems führen. Die Ausgestaltung eines Batteriemoduls als Bodenschale eines Gehäuses besitzt den Vorteil, dass der gesamte im Bodenbereich des Computersystems zur Verfügung stehende Raum zur Bereitstellung von Batteriekapazität genutzt werden kann. Gleichzeitig bedingt die verhältnismäßig hohe Dichte des Batteriemoduls einen sicheren Stand des Computersystems.

Gemäß einer vorteilhaften Ausgestaltung ragt das als Gehäusedeckel ausgestaltete Batteriemodul zumindest teilweise in wenigstens einen in dem Gehäuse verbleibenden Hohlraum, insbesondere eine Aussparung der wenigstens einen Systemkomponente oder einen Zwischenraum zwischen zwei benachbarten Systemkomponenten, hinein. Auf diese Weise können in dem Computersystem vorhandene Hohlräume zur Erhöhung der Batteriekapazität verwendet werden.

Gemäß einer vorteilhaften Ausgestaltung umfasst das Computersystem eine Mehrzahl von Komponenten, die zusammengenommen eine Oberflächenstruktur bilden, und das als Gehäusedeckel ausgestaltete Batteriemodul weist eine inverse Oberflächenstruktur auf, die im in das Computersystem aufgenommenen Zustand den zur Verfügung stehenden Raum im Wesentlichen vollständig ausfüllt. Durch die Ausfüllung sämtlicher zur Verfügung stehender Hohlräume wird die Batteriekapazität des Batterie betriebenen Computersystems optimiert.

Gemäß einer vorteilhaften Ausgestaltung umfasst das Batteriemodul eine plastische Substanz zur Speicherung von Energie, die den als Batteriemodul ausgestalteten Gehäusedeckel im Wesentlichen vollständig ausfüllt. Durch die Verwendung einer plastischen Substanz zur Speicherung von Energie kann der gesamte zur Verfügung stehende Raum zur Erhöhung der Batteriekapazität verwendet werden.

Gemäß einer weiteren vorteilhaften Ausgestaltung umfasst das Batterie betriebene Computersystem wenigstens ein weiteres flaches Batteriemodul, das eine Ausdehnung besitzt, die im Wesentlichen der Grundfläche des Gehäuses entspricht, wobei das weitere Batteriemodul zwischen dem als Gehäusedeckel ausgestalteten Batteriemodul und der Systemkomponente angeordnet ist.

Durch die Anordnung eines weiteren Batteriemoduls zwischen dem als Gehäusedeckel ausgestalteten Batteriemodul und der Systemkomponente kann die Batteriekapazität des Batterie betriebenen Computersystems weiter erhöht werden. Dabei bleibt die Grundform des Gehäuses des Computersystems weitgehend unberührt. Insbesondere kann die Batteriekapazität des Computersystems linear mit einer Dicke des Computersystems vergrößert werden.

Die Erfindung wird nachfolgend anhand von unterschiedlichen Ausführungsbeispielen und Figuren näher beschrieben. Dabei werden für gleiche oder gleich wirkende Komponente einheitliche Bezugszeichen in den unterschiedlichen Ausführungsbeispielen und Figuren verwendet.

### In den Figuren zeigen:

- Figur 1: eine Ausgestaltung eines Computersystems mit einem als Bodenschale ausgebildeten Batteriemodul,
- Figur 2: eine Aufsicht auf und einen Querschnitt durch ein Batteriemodul gemäß einer Ausgestaltung der Erfindung,
- Figur 3: eine weitere Ausgestaltung eines Computersystems mit zwei übereinander angeordneten Batteriemodulen,
- Figur 4: eine weitere Ausgestaltung eines Computersystems mit einem als Gehäusedeckel ausgebildeten Batteriemodul und
- Figur 5: Anordnungen von Komponenten in konventionellen Computersystemen mit unterschiedlichen Batteriemodulen.

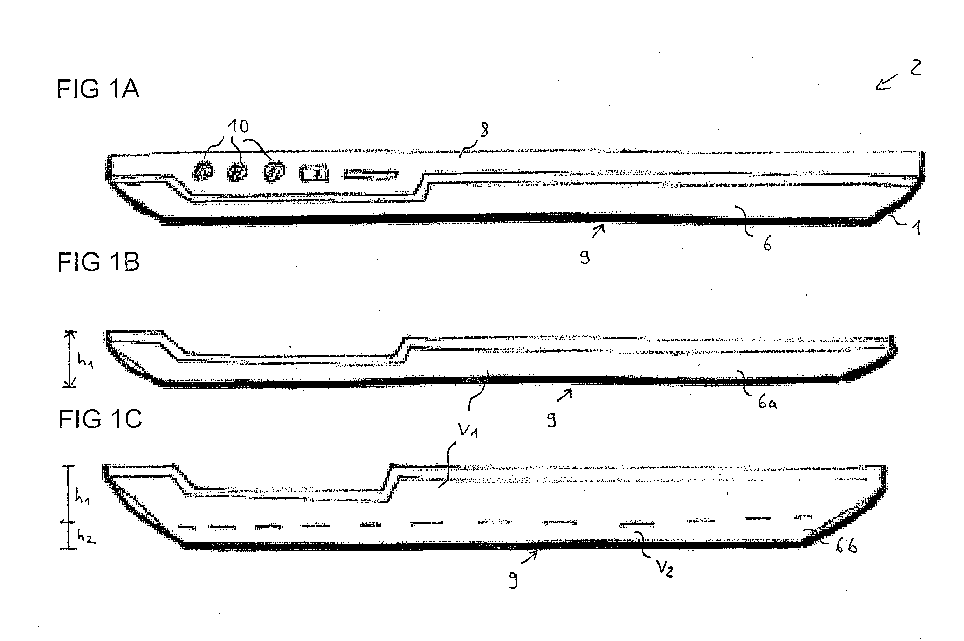

Figur 1A zeigt eine erste Ausgestaltung eines erfindungsgemäßen Computersystems 2 mit einem Gehäuse 1. Das Computersystem 2 umfasst ein von einem Grundkörper 8 des Gehäuses 1 abnehmbares Batteriemodul 6 sowie ein oder mehrere in dem Grundkörper 8 angeordnete Systemkomponenten, beispielsweise verschiedene elektronische Baugruppen wie eine Hauptplatine mit einem Prozessor und Erweiterungsmodule. An dem Grundkörper 8 können auch weitere Baugruppen, insbesondere eine klappbare Anzeigeeinheit angeordnet sein. Diese sind der Übersichtlichkeit halber in der Figur 1A jedoch nicht dargestellt.

In der Seitenansicht gemäß der Figur 1A ist jedoch zu erkennen, dass Anschlusselemente 10 oder andere für den Benutzer zugängliche Bedienelemente des Computersystems 2 an dem Grundkörper 8 des Gehäuses 1 angeordnet sind.

Das Batteriemodul 6 ist in der Ausgestaltung gemäß Figur 1A als untere Gehäuseschale des Computersystems 2 ausgestaltet. Das verhältnismäßig schwere Batteriemodul 6 dient als Standfläche 9 für das Computersystem 2 und schließt gleichzeitig das Gehäuse 1 des Computersystems 2 nach unten hin ab. Das Batteriemodul 6 ist flächig ausgestaltet und besitzt im Wesentlichen dieselbe Ausdehnung wie der Grundkörper 8.

Weitere Batteriezellen zur Versorgung der Systemkomponenten mit einem Betriebsstrom sind in dem Computersystem gemäß Figur 1A nicht vorgesehen. Insbesondere umfasst der als Oberschale des Gehäuses 1 dienende Grundkörper 8 kein weiteres Batteriemodul. Allerdings kann zur Speicherung von Systemzuständen eine Hilfsbatterie vorgesehen sein, die ausgewählte Komponenten mit einem Bereitschaftsstrom versorgt, insbesondere eine so genannte CMOS-Batterie zur Stromversorgung eines BIOS-Bausteins im ausgeschalteten Zustand des Computersystems 2.

In den Figuren 1B und 1C ist dargestellt, dass unterschiedliche Batteriemodule 6a bzw. 6b mit demselben Grundkörper 8 zu einem Computersystem 2 verbunden werden können. Gemäß der hier beschriebenen Ausgestaltung ist zu jedem Zeitpunkt nur ein einzelnes der dargestellten Batteriemodule 6a und 6b mit dem Computersystem 2 verbunden.

Das Batteriemodul 6a ist verhältnismäßig flach ausgestaltet und weist eine mittlere Batteriekapazität, zum Beispiel 48 Wh auf. Beispielsweise weist es eine Höhe h₁ von weniger als fünf Millimeter auf. Zusammen mit dem Grundkörper 8, dessen Höhe beispielsweise im Bereich von etwa zehn bis 15 Millimeter liegt, kann so ein Computersystem 2 aufgebaut werden, das eine Gesamthöhe von 20 Millimeter nicht überschreitet.

Das Batteriemodul 6b weist eine größere Bauhöhe h = h₁ + h₂ auf als das Batteriemodul 6a. Beispielsweise kann es eine Höhe von fünf bis 20 Millimeter, beispielsweise 10 oder 15 Millimeter, aufweisen. Durch die zusätzliche Höhe h₂ weist das Batteriemodul 6b ein wesentlich größeres Volumen V = V₁ + V₂ auf. Wird das Volumen V vollständig von einer in das Batteriemodul 6 angeordneten Batteriezelle 7 ausgefüllt, erhöht sich dessen Speicherkapazität entsprechend der Volumenzunahme, beispielsweise auf eine Kapazität von 96 Wh.

Die Oberseiten der Batteriemodule 6a und 6b sind gleich ausgestaltet. Daher kann das flache Batteriemodul 6a durch das etwas dickere Batteriemodul 6b ersetzt werden. Das sich ergebende Computersystem 2 weist dann insgesamt zwar eine höhere Bauhöhe auf, besitzt jedoch den Vorteil einer deutlich längeren Betriebszeit.

Um das Volumen der Batteriemodule 6a beziehungsweise 6b optimal zur Speicherung von elektrischer Energie auszunutzen, wird bevorzugt eine wiederaufladbare Lithium-Polymer-Batterie als Energiequelle verwendet. Aus Folienschichten aufgebaute Lithium-Polymer-Batterien lassen sich in beinahe jeder beliebigen Form herstellen, so dass sie im Gegensatz zu zylinderförmigen Batteriezellen den zur Verfügung stehenden Raum optimal zur Energiespeicherung ausnutzen können.

Auch andere Vorrichtungen zur Speicherung von Energie können in dem erfindungsgemäßen Batteriemodul 6 Verwendung finden, sofern sie aufgrund ihrer physikalischen Eigenschaften geeignet sind, ein flächig ausgestaltetes Batteriemodul 6 weitgehend vollständig zur Speicherung von Energie zu nutzen. Hierfür eignen sich insbesondere derartige Anordnungen, bei denen eine plastische Substanz zur Speicherung von Energie verwendet wird.

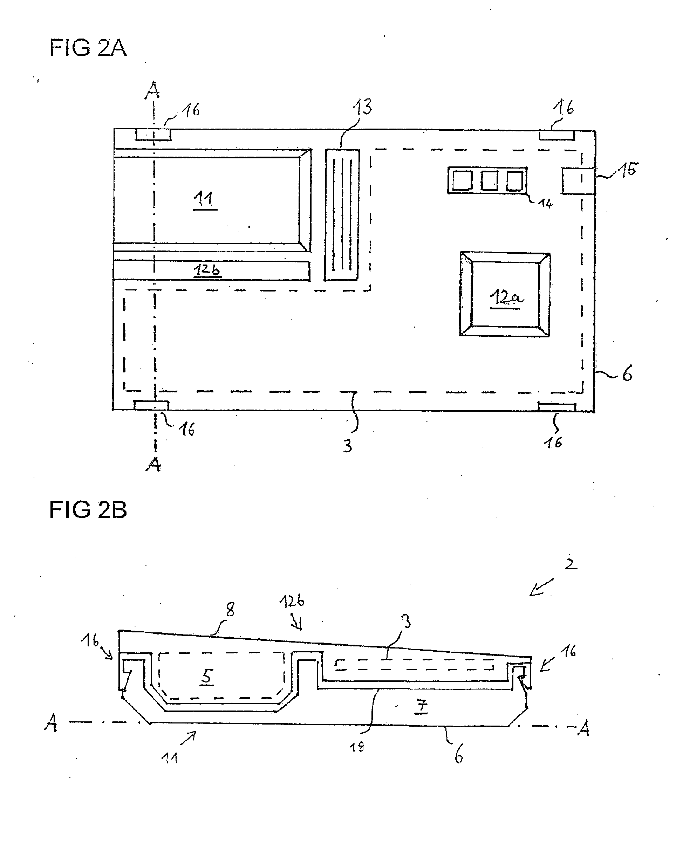

Figur 2A zeigt eine Aufsicht auf ein Batteriemodul 6. Im in der Figur 2A dargestellten Ausführungsbeispiel weist das Batteriemodul 6 eine unebene Oberfläche auf, die im zusammengesetzten Zustand bündig mit einem Grundkörper 8 eines Computersystems 2 abschließt und dessen Gehäusedeckel, insbesondere dessen Bodenschale, bildet. Im dargestellten Ausführungsbeispiel weist das Batteriemodul 6 eine wannenförmige Vertiefung 11 und zwei Erhebungen 12a und 12b auf.

Die Vertiefung 11 dient zur Aufnahme einer ersten Systemkomponente, beispielsweise einem verhältnismäßig dicken Erweiterungsmodul 5. Beispielsweise kann im Bereich der Vertiefung 11 ein DVD-Laufwerk angeordnet sein. Durch die Vertiefung 11 in dem Batteriemodul 6 kann trotz der Verwendung verhältnismäßig hoher Einzelkomponenten eine besonders flache Bauweise des Computersystems 2 gewährleistet werden.

Umgekehrt vergrößern die Erhebungen 12a und 12b das Volumen des Batteriemoduls 6 und somit die Speicherkapazität der darin integrierten Batteriezelle 7. Beispielsweise kann die Erhebung 12a in einen Hohlraum einer zweiten Systemkomponente eindringen, beispielsweise in eine Ausnehmung einer Hauptplatine 3 oder Bereiche der Hauptplatine 3, in denen keine weiteren elektronischen Komponenten angeordnet sind. Die Erhebung 12b ist in einem Bereich vorgesehen, in dem sich keine Systemkomponente befindet, im Ausführungsbeispiel in einem Zwischenbereich zwischen der Hauptplatine 3 und dem Erweiterungsmodul 5. Zum besseren Verständnis ist die in Projektionsrichtung der Figur 2A über dem Batteriemodul 6 angeordnete Hauptplatine 3 gestrichelt dargestellt.

Darüber hinaus weist das Batteriemodul 6 gemäß Figur 2A weitere, optionale Merkmale auf. Beispielsweise ist in einem zentralen Bereich des Batteriemoduls 6 ein Lüftungsgitter 13 vorgesehen. Im Bereich des Lüftungsgitters 13 ist das Batteriemodul 6 dünn ausgestaltet und weist Durchtrittsöffnungen auf. Somit ist eine Kühlung von einzelnen elektronischen Komponenten des Computersystems 2 auch von unten her durch das Batteriemodul 6 möglich.

Auf der Oberseite des Batteriemoduls 6 ist des Weiteren ein Anschlussfeld 14 vorgesehen. Das Anschlussfeld 14 dient zur elektrischen Verbindung des Batteriemoduls 6 mit wenigstens einer der Systemkomponenten. Beispielsweise kann es sich dabei um Kontaktflächen oder Kontaktfedern handeln, die mit einer entsprechenden Kontaktfeder beziehungsweise Kontaktfläche der Systemkomponente zusammenwirken. Im Ausführungsbeispiel ist ein dreipoliges Anschlussfeld 14 vorgesehen, das einen positiven, einen negativen sowie einen Datenanschluss zum Übermitteln von Batterieinformationen an die Hauptplatine 2 umfasst. Selbstverständlich können auch andere Anschlussfelder, beispielsweise mit weniger oder mehr Kontaktflächen und andere Ausgestaltungen, wie beispielsweise Klinken- oder Pfostenstecker, Verwendung finden.

Im Ausführungsbeispiel weist das Batteriemodul 6 zusätzlich eine Anschlussbuchse 15 zum Anschluss eines externen Netzteils auf. Somit wird die Energie zum Laden der Batteriezelle 7 sowie zum Betrieb des Computersystems 2 bei Netzbetrieb über den Anschluss 15 an das Batteriemodul 6 bereitgestellt und von dort über das Anschlussfeld 14 an die Systemkomponente weitergeleitet. Alternativ ist es auch möglich, den Anschluss 15 an dem Grundkörper 8 bzw. der Hauptplatine 3 vorzusehen, und sowohl einen Ladestrom als auch einen Entladestrom des Batteriemoduls 6 über das Anschlussfeld 14 zu übertragen.

Zur mechanischen Befestigung des Batteriemoduls 6 an dem Grundkörper 8 des Gehäuses 1 weist das Batteriemodul 6 gemäß Figur 2A vier Rastelemente 16 auf. Die Rastelemente 16 sind im Ausführungsbeispiel in der Nähe der vier Ecken des Batteriemoduls 6 angeordnet und dienen zur sicheren Verrastung des Batteriemoduls 6 mit dem Grundkörper 8 des Computersystems 2. Durch Eindrücken der Rastelemente 16 kann das Batteriemodul 6 von dem Grundkörper 8 gelöst werden. Selbstverständlich sind auch andere, aus dem Stand der Technik bekannte Befestigungselemente zur Befestigung des Batteriemoduls 6 möglich. Beispielsweise kann eine Kunststoff ummantelte Batteriezelle 7 mittels einer aus Aluminium gefertigten Bodenschale an dem Gehäuse 1 befestigt und in dessen Design integriert werden.

Figur 2B zeigt einen Querschnitt entlang der Achse A-A durch das Computersystem 2 gemäß Figur 2A. Darin ist zu erkennen, dass das Batteriemodul 6 einen unteren Gehäusedeckel bildet, während die Hauptplatine 3 und das Erweiterungsmodul 5 im den oberen Gehäusedeckel bildenden Grundkörper 8 angeordnet sind. Zusammen bilden sie das Gehäuse 1 des Computersystems 2.

Zum Schutz der einzelnen Systemkomponenten, also im Ausführungsbeispiel der Hauptplatine 3 und des Erweiterungsmoduls 5, ist eine Trennwand 18 vorgesehen, die den Grundkörper 8 nach unten hin abschließt. Bezüglich der Trennwand 18 sind das Batteriemodul 6 und die Oberfläche der Systemkomponenten zueinander invers oder komplementär ausgebildet. Das heißt, das Erhebungen der Systemkomponenten in Aussparungen 11 des Batteriemoduls 6 eindringen und Erhebungen 12 des Batteriemoduls 6 in Aussparungen der Systemkomponenten oder Lücken zwischen den Systemkomponenten eindringen.

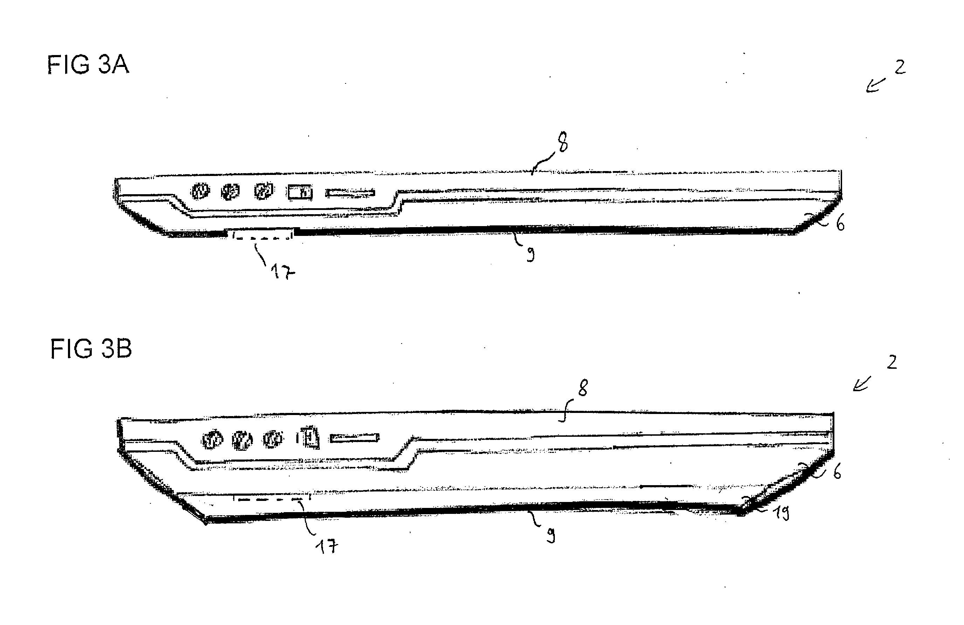

Die Figuren 3A und 3B zeigen eine weitere Ausgestaltung der Erfindung. In der Figur 3A ist ein Computersystem 2 umfassend einen Grundkörper 8 und ein erstes Batteriemodul 6 dargestellt. Beispielsweise kann der Grundkörper 8 ähnlich aufgebaut sein wie der bezüglich Figur 1A beschriebene. Auch das erste Batteriemodul 6 ist ähnlich aufgebaut wie das unter Bezugnahme auf die Figur 1A beschriebene. Insbesondere ist auch das erste Batteriemodul 6 gemäß Figur 3A als Bodenschale des Gehäuses 1 des Computersystems 2 ausgestaltet.

Darüber hinaus weist das Batteriemodul 6 jedoch ein zweites Anschlussfeld 17 an der als Standfläche 9 dienenden Unterseite des Gehäuses 1 auf. Das zweite Anschlussfeld 17 dient zur Kopplung des ersten Batteriemoduls 6 mit einem weiteren, zweiten Batteriemodul 19, das in Figur 3B dargestellt ist.

In der Figur 3B ist ein Computersystem 2 mit zwei Batteriemodulen 6 und 19 zu erkennen. Dabei entspricht das ersten Batteriemodul 6 dem im oberen Teil dargestellten Batteriemodul 6. Auch das zweite Batteriemodul 19 ist verhältnismäßig flach ausgestaltet und besitz eine Ausdehnung, die im Wesentlichen der Grundfläche des Gehäuses 1 entspricht. Es kann an das erste Batteriemodul 6 oder den Grundkörper 8 des Gehäuses 1 mechanisch angekoppelt werden. Im angekoppelten Zustand dient das zweite Batteriemodul 19 als Standfläche 9 für das Computersystem 2. Gleichzeitig wird die Batteriekapazität des Computersystems 2 und damit dessen Betriebsdauer durch Aufnahme des zweiten Batteriemoduls 19 erhöht.

In dem in der Figur 3B dargestellten Ausführungsbeispiel weist das weitere Batteriemodul 19 eine geringfügig kleinere Flächenausdehnung auf, als das darüber angeordnete erste Batteriemodul 6. Auf diese Weise lässt sich das weitere Batteriemodul 19 auf ästhetisch ansprechende Weise in das Gehäuse 1 des Computersystems 2 integrieren.

In einer alternativen, in den Figuren nicht dargestellten Ausgestaltung wird ein zweites Batteriemodul 19 zwischen einem als Bodenschale ausgestalteten ersten Batteriemodul 6 und dem Grundkörper 8 angeordnet. Beispielsweise kann ein zweites Batteriemodul 19 mit einer Bauhöhe von wenigen Millimetern, zum Beispiel vier Millimetern, zwischen dem als Bodendeckel ausgebildeten ersten Batteriemoduls 6 und dem Grundkörper 8 angeordnet werden. Bevorzugt schleift das zweite Batteriemodul 19 das elektrische Anschlussfeld 14 des ersten Batteriemoduls 6 zu einem entsprechenden Anschlusselement des Grundkörpers 8 durch. Das erste Batteriemodul 6 gemäß dieser Ausgestaltung bedarf daher keines zweiten Anschlussmoduls 17. Das zweite Batteriemodul 19 dient wiederum zur Erhöhung der Kapazität und somit zu einem verlängerten Betrieb des Computersystems 2.

Ist das weitere Batteriemodul 19 symmetrisch ausgestaltet, das heißt sind die Kontur und Anschlusselemente seiner Ober- und Unterseiten gleichartig ausgestaltet, kann durch Aufeinanderstapeln weiterer Batteriemodule 19 die Kapazität des Computersystems 2 nahezu beliebig vergrößert werden. Somit kann der Benutzer des Computersystems 2 eine für seinen Gebrauchszweck optimale Abwägung zwischen Dicke des Computersystems 2 einerseits und Kapazität der darin enthaltenden Batteriemodule 6 beziehungsweise 19 andererseits vornehmen.

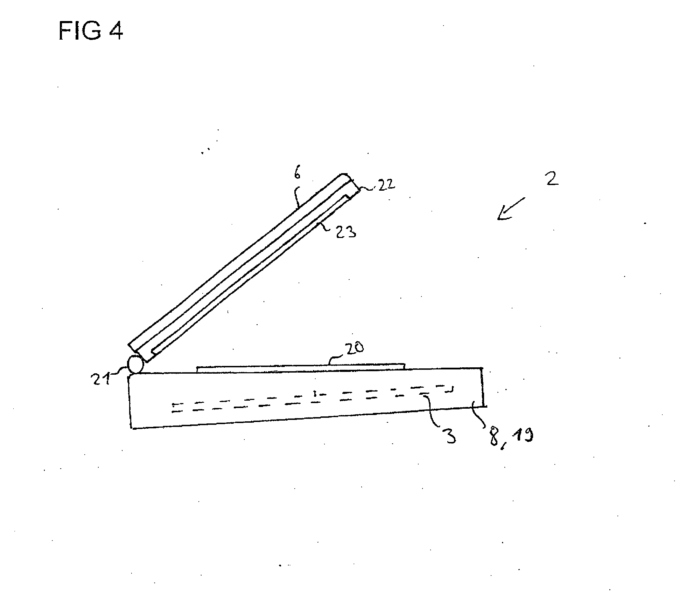

Figur 4 zeigt ein weiteres Batterie betriebenen Computersystems 2. Ein Gehäuse 1 des Computersystems 2 umfasst einen Grundkörper 8 in dem unter anderem eine Hauptplatine 3 sowie eine Tastatur 20 als Systemkomponenten aufgenommen sind. Über ein Scharnier 21 ist ein klappbarer Gehäuseteil 22 mit dem Grundkörper 8 verbunden. Das Gehäuseteil 22 umfasst eine weitere Systemkomponente, nämlich eine Anzeige 23, insbesondere eine Flüssigkristallanzeige.

Um das Computersystem 2 mit Energie zu versorgen und um eine bereits in den Grundkörper 8 integrierte Batteriezelle zu erweitern, umfasst das Gehäuseteil 22 zusätzlich ein Batteriemodul 6, das einen oberen Gehäusedeckel des Gehäuses 1 bildet. Bevorzugt ist das Batteriemodul 6 wiederum abnehmbar an dem Gehäuseteil 22 befestigt, beispielsweise hinter einer Abdeckung angeordnet oder mit dem Gehäuseteil 22 verrastet.

Wie in den zuvor beschriebenen Ausführungsbeispielen ist das Batteriemodul 6 besonders flach ausgestaltet und besitzt im Wesentlichen eine Ausdehnung, die der der Anzeige 23 entspricht. Insbesondere bei der Verwendung von Lithium-Polymer-Zellen ist ein Aufbau des Batteriemoduls 6 mit Hilfe von Schichtfolien mit einer Dicke von einigen Mikrometern Höhe möglich. Somit kann selbst in dem Gehäuseteil 22 eine weitere Batteriezelle 7 in Form des Batteriemoduls 6 angeordnet werden.

Um die mechanische Stabilität des Computersystems 2 nicht nachteilig zu beeinflussen, insbesondere um die Standsicherheit des Computersystems 2 sicherzustellen, empfiehlt sich die Verwendung eines in dem Gehäuseteil 22 angeordneten Batteriemoduls 6 insbesondere dann, wenn der Grundkörper 8 verhältnismäßig schwer ausgestaltet ist. Dies wird unter anderem dadurch bewirkt, dass die Bodenschale des Grundkörpers 8 als weiteres Batteriemodul 19 ausgestaltet ist. Wird somit sowohl in dem Grundkörper 8 als auch in dem Gehäuseteil 22 des Gehäuses 1 ein Batteriemodul 6 beziehungsweise 19 integriert, kann die Batteriekapazität des Computersystems 2 noch weiter vergrößert werden.

Weitere Abwandlungen und Ausgestaltungen der in den Ausführungsbeispielen beschriebenen Konzepte sind möglich. Insbesondere können die einzelnen Elemente der unterschiedlichen Ausführungsbeispiele miteinander kombiniert werden, so dass ein Computersystem 2 mit einer Vielzahl von unterschiedlichen ausgestalteten Batteriemodulen 6 und 19 entsteht.

Bezugszeichen
- 1: Gehäuse
- 2: Computersystem
- 3: Hauptplatine
- 4: Prozessor
- 5: Erweiterungsmodul
- 6: (erstes) Batteriemodul
- 7: Batteriezelle
- 8: Grundkörper
- 9: Standfläche
- 10: Anschlusselement
- 11: Vertiefung
- 12: Erhebung
- 13: Lüftungsgitter
- 14: (erstes) Anschlussfeld
- 15: Anschluss
- 16: Rastelement
- 17: (zweites) Anschlussfeld
- 18: Trennwand
- 19: (zweites) Batteriemodul
- 20: Tastatur
- 21: Scharnier
- 22: Gehäuseteil
- 23: Anzeige

## Patentansprüche

1. Batterie betriebenes Computersystem (2) in Form eines Notebooks oder Netbooks, umfassend:
wenigstens eine Systemkomponente zur Datenverarbeitung, wenigstens ein Gehäuse (1) zur Aufnahme der Systemkomponente und wenigstens ein in das Gehäuse (1) integriertes, austauschbares Batteriemodul (6) zur Energieversorgung der Systemkomponente, wobei das Batteriemodul (6) einen unteren Gehäusedeckel des Gehäuses (1) bildet, und als flache Bodenschale ausgestaltet ist und wobei die Bodenschale als Standfläche (9) des Computersystems (2) im Normalbetrieb ausgebildet ist, **dadurch gekennzeichnet, dass** das Batteriemodul (6) eine Ausdehnung besitzt, die einer Grundfläche des Gehäuses (1) entspricht, so dass der gesamte im Bodenbereich des Computersystems (2) zur Verfügung stehende Raum zur Bereitstellung von Batteriekapazität genutzt werden kann.

2. Batterie betriebenes Computersystem (2) nach Anspruch 1,
**dadurch gekennzeichnet, dass**
das Gehäuse einen Grundkörper (8) sowie ein damit beweglich verbundenes Gehäuseteil (22) umfasst und ein zweites Batteriemodul (6) als oberer Gehäusedeckel des Gehäuseteils (22) ausgestaltet ist.

3. Batterie betriebenes Computersystem (2) nach einem der Ansprüche 1 bis 2, **dadurch gekennzeichnet, dass** zwischen der wenigstens einen Systemkomponente und dem als Batteriemodul (6) ausgebildeten Gehäusedeckel eine Trennwand (18) zur elektrischen Isolation angeordnet ist.

## Claims

1. Battery-operated computer system (2) in the form of a notebook or netbook, comprising: at least one system component for data-processing, at least one housing (1) for holding the system component, and at least one replaceable battery module (6), which is integrated into the housing (1), for supplying power to the system component, wherein the battery module (6) forms a lower housing cover of the housing (1) and is designed as a flat base shell, and wherein the base shell is in the form of a standing surface (9) of the computer system (2) during normal operation, **characterized in that** the battery module (6) has an extent which corresponds to a base area of the housing (1), so that all of the space available in the base region of the computer system (2) can be used to provide battery capacity.

2. Battery-operated computer system (2) according to Claim 1, **characterized in that** the housing comprises a main body (8) and also a housing part (22) which is connected in a movable manner to the said main body, and a second battery module (6) is designed as an upper housing cover of the housing part (22).

3. Battery-operated computer system (2) according to either of Claims 1 and 2, **characterized in that** a partition wall (18) for electrical insulation is arranged between the at least one system component and the housing cover which is in the form of a battery module (6).

## Revendications

1. Système informatique (2) fonctionnant par batterie, sous la forme d'un notebook ou d'un netbook, comprenant :
au moins un composant de système pour le traitement des données, au moins un boîtier (1) pour recevoir le composant de système et au moins un module de batterie (6) remplaçable, intégré dans le boîtier (1) pour l'alimentation en énergie du composant de système, le module de batterie (6) formant un couvercle de boîtier inférieur du boîtier (1) et étant configuré sous forme de coque de fond plate et la coque de fond étant réalisée sous forme de surface d'appui (9) du système informatique (2) pendant le fonctionnement normal,
**caractérisé en ce que** le module de batterie (6) possède une étendue qui correspond à une surface de base du boîtier (1) de sorte que l'ensemble de l'espace disponible dans la région de fond du système informatique (2) puisse être utilisé pour fournir la capacité de la batterie.

2. Système informatique (2) fonctionnant par batterie selon la revendication 1, **caractérisé en ce que** le boîtier comprend un corps de base (8) ainsi qu'une partie de boîtier (22) connectée de manière mobile à celui-ci et un deuxième module de batterie (6) est configuré sous forme de couvercle supérieur de boîtier de la partie de boîtier (22).

3. Système informatique (2) fonctionnant par batterie selon l'une quelconque des revendications 1 et 2, **caractérisé en ce**
**qu'**entre l'au moins un composant de système et le couvercle de boîtier réalisé sous forme de module de batterie (6) est disposée une paroi de séparation (18) pour l'isolation électrique.
